# EUROPÄISCHE PATENTSCHRIFT

(11) **EP 1 143 124 B1**
(45) Veröffentlichungstag und Bekanntmachung des Hinweises auf die Patenterteilung: **01.09.2004**
(21) Anmeldenummer: 01106206.4
(22) Anmeldetag: 14.03.2001
(51) Int. Cl.: F01P 3/20, F01P 11/20, F01N 5/02, F02N 17/06

(54) **Flüssigkeitsgekühlte, thermostatgesteuerte Brennkraftmaschine für ein Fahrzeug, insbesondere PKW**
Liquid cooled, thermostatically controlled internal combustion engine for a vehicle, especially for motor cars
Moteur à combustion interne refroidi par liquide et commandé par thermostat pour véhicule, notamment pour automobiles

(30) Priorität: 07.04.2000 DE 10017434
(43) Veröffentlichungstag der Anmeldung: 10.10.2001
(73) Patentinhaber: Bayerische Motoren Werke Aktiengesellschaft, 80809 München (DE)
(72) Erfinder: Chekaiban, Georg, 85283 Wolnzach (DE); Gebhart, Thomas, 76879 Essingen (DE); Sigl, Klaus, 85737 Ismaning (DE); Nüsslein, Gerhard, 91230 Kainsbach (DE)

(56) Entgegenhaltungen:
- DE-A- 4 032 701
- GB-A- 2 335 706
- US-A- 5 894 834

## Beschreibung

Die Erfindung bezieht sich nach dem Oberbegriff des Patentanspruches 1 auf eine flüssigkeitsgekühlte, thermostatgesteuerte Brennkraftmaschine für ein Fahrzeug, insbesondere PKW, umfassend einen mit dem Kühlkreis der Brennkraftmaschine verbundenen und vom Abgas einer Abgasleitung gesteuert beaufschlagten Nutz-Wärmetauscher, wobei mit dem Kühlkreis ferner ein zuschaltbarer Heizwärmetauscher einer Heiz-/Klimaanlage des Fahrzeuges in Verbindung steht.

Eine derartige Brennkraftmaschine für ein Fahrzeug ist beispielsweise aus der US 4,391,235 bekannt, wobei der zur Abgasleitung parallel angeordnete Nutz-Wärmetauscher automatisch unterhalb einer vorbestimmten Temperatur des Kühlmittels im Kühlkreislauf der Brennkraftmaschine zugeschaltet wird mittels eines die Abgasleitung sperrenden Ventils. Das insbesondere bei einem Kaltstart der Brennkraftmaschine im Nutz-Wärmetauscher erwärmte Kühlmittel ist der Brennkraftmaschine zugeführt, wobei ein Teil dieses erwärmten Kühlmittels ventilgesteuert über einen Heizwärmetauscher geführt werden kann.

Noch eine derartige Brennkraftmaschine wird in US 5894834 gezügt. Nachteilig bei dieser bekannten Anordnung ist zum einen, dass ein die Abgasleitung zur Umlenkung des Abgases zum Nutz-Wärmetauscher verschließendes Ventil die ansaug- und abgas-seitige Gasdynamik der Brennkraftmaschine empfindlich stört, und zum anderen, dass dem Heizwärmetauscher zum Aufheizen der Fahrgastkabine lediglich eine Teilmenge des mittels des Abgases zusätzlich erwärmten, zur Brennkraftmaschine rückgeführten Kühlmittels zugeführt ist.

Der Erfindung liegt die Aufgabe zugrunde, die gattungsgemäße Anordnung so zu verbessern, dass gasdynamische Vorgänge in der Abgasleitung kaum gestört sind und ferner dem Heizwärmetauscher bei Kaltstart und niederer Last der Brennkraftmaschine eine größtmögliche Wärmemenge zugeführt ist.

Diese Aufgabe ist mit dem Patentanspruch 1 dadurch gelöst, dass der Nutz-Wärmetauscher mittels eines Abgas-Sammelbehälters an einer Abgas-Abzweigleitung einen mit der Abgasleitung klappengesteuert verbundenen Blindstrang bildet, und eine Vorlaufleitung bei einem vom Thermostat abgesteuerten Fahrtwind-Kühlmittel-Wärmetauscher der Brennkraftmaschine den abgasbeaufschlagten Nutz-Wärmetauscher mit einem Kühlmittel-Kurzschlussbereich der Brennkraftmaschine verbindet, wobei von zwei vom Nutz-Wärmetauscher abgehenden, ventilgesteuerten Rücklaufleitungen die mit dem Heizwärmetauscher verbindbare Rücklaufleitung in einem Steuerprogramm vorrangig bewertet ist gegenüber der mit einer Umwälzpumpe der Brennkraftmaschine ansaugseitig verbundenen anderen Rücklaufleitung.

Der Vorteil der Erfindung ist zum einen in der Anordnung des Nutz-Wärmetauschers in einem zur Abgasleitung ausgebildeten Blindstrang zu sehen, womit ein den Abgas-Durchfluss durch die Abgasleitung verschließendes Ventil entfällt und somit die Gasdynamik der Brennkraftmaschine im wesentlichen ungestört bleibt, da die vorgesehene Klappe nur einen Teilquerschnitt der Abgasleitung verschließt. Der zweite Vorteil der Erfindung ist darin zu sehen, dass insbesondere bei einem Kaltstart und einem nachfolgenden Betrieb bei niederer Last der Brennkraftmaschine der abgasbeaufschlagte Nutz-Wärmetauscher wie beim vorbeschriebenen Stand der Technik mit einem Kühlmittel-Kurzschlussbereich der Brennkraftmaschine in Verbindung steht, wobei aber dem Heizwärmetauscher der Heiz-/Klimaanlage des Fahrzeuges sowohl im Kurzschlussbetrieb der Brennkraftmaschine erwärmtes Kühlmittel als auch vom Nutz-Wärmetauscher abgaserwärmtes Kühlmittel zugeführt ist, wobei der Anteil des abgaserwärmten Kühlmittels gemäß einem weiteren Ausbildungsmerkmal der Erfindung über eine regelbare Förderpumpe einstellbar ist.

Bezüglich der erfindungsgemäßen Weiterbildung der Abgasleitung wird vorgeschlagen, dass der mit dem Abgas beaufschlagte Nutz-Wärmetauscher versehene Blindstrang im Bereich einer Anschlussstelle der Abzweigleitung an die Abgasleitung mit einer teilweise in den Abgasstrom der Abgasleitung gesteuert schwenk- oder drehbaren Klappe ausgerüstet ist, die in Ausgangsposition die Abgas-Abzweigleitung verschließt und somit auch in der Schließstellung kein Strömungshindernis in der Abgasleitung bildet.

Ein weiteres Ausgestaltungsmerkmal der Erfindung bezieht sich darauf, dass die Vorlaufleitung des abgasbeaufschlagten Nutz-Wärmetauschers an einer im Bypass zum Thermostaten angeordneten Vorlaufleitung des Fahrtwind-Kühlmittel-Wärmetauschers angeschlossen ist und eine stromab dieses Anschlusses vorgesehene regelbare Förderpumpe der Kühlmittelmengen-Steuerung durch den Nutz-Wärmetauscher dient, wenn dieser bei Kaltstart und niederer Last zur Steigerung der Temperatur des aus dem Kühlmittel-Kurzschlussbereich der Brennkraftmaschine zugeführten Kühlmittels versorgt ist.

Mit der erfindungsgemäß in einem Steuerprogramm vorrangig bewerteten Versorgung des Heizwärmetauschers der Heiz-/Klimaanlage des Fahrzeuges mit vorwiegend durch Abgas aufgeheiztem Kühlmittel ist eine vorteilhaft raschere Erwärmung der Fahrgastzelle bzw. auch eine Defrostung erzielt. Ab einer subjektiv ausreichenden Temperierung der Fahrgastzelle kann der Fahrer des Fahrzeuges über das Steuerprogramm eine weitere Versorgung des Heizwärmetauschers mit durch Abgas aufgeheiztem Kühlmittel absteuern, wobei über das Steuerprogramm die zweite Rücklaufleitung des Nutz-Wärmetauschers zugeschaltet ist zur Versorgung der Brennkraftmaschine mit zusätzlich erwärmten Kühlmittel. Schließlich ist im Steuerprogramm auch eine dritte Bewertung vorgesehen, gemäß der beide Rücklaufleitungen gemeinsam betrieben werden können.

Gemäß weiteren Ausgestaltungsmerkmalen können die beiden Rücklaufleitungen entweder über ein Mehr-Wegeventil oder über Taktventile gesteuert werden.

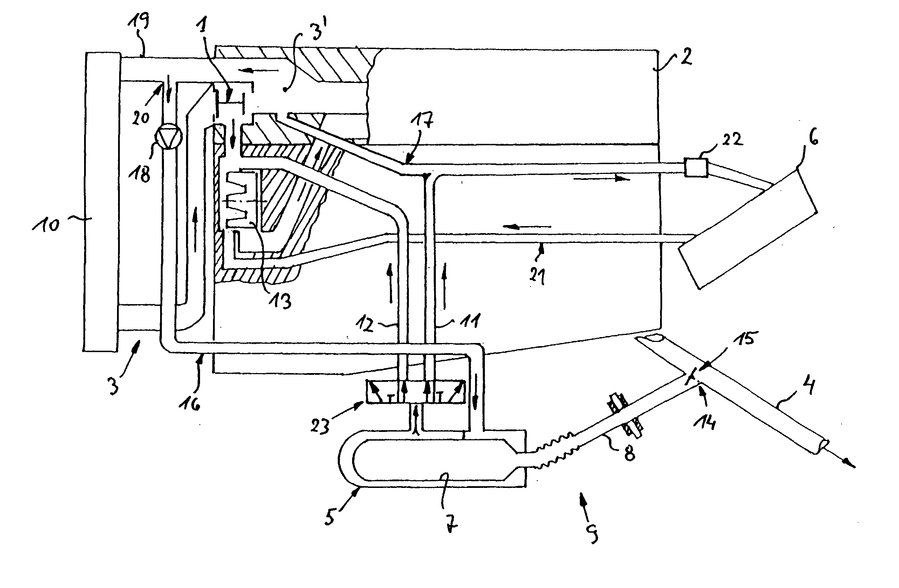

Die Erfindung ist anhand eines in der Zeichnung schematisch dargestellten Ausführungsbeispiels beschrieben.

Eine mit einem Thermostat 1 ausgerüstete, flüssigkeitsgekühlte Brennkraftmaschine 2 für ein nicht dargestelltes Fahrzeug umfasst einen mit dem Kühlkreislauf 3 der Brennkraftmaschine 2 verbundenen und vom Abgas einer Abgasleitung 4 gesteuert beaufschlagten Nutz-Wärmetauscher 5, wobei mit dem Kühlkreislauf 3 ferner ein zuschaltbarer Heizwärmetauscher 6 einer nicht gezeigten Heiz-/Klimaanlage des Fahrzeuges in Verbindung steht.

Wie aus der einzigen Figur ersichtlich, bildet der Nutz-Wärmetauscher 5 mittels eines Abgas-Sammelbehälters 7 an einer Abgas-Abzweigleitung 8 einen mit der Abgasleitung 4 klappengesteuert verbundenen Blindstrang 9. Der den abgasbeaufschlagten Nutz-Wärmetauscher 5 umfassende Blindstrang 9 ist im Bereich einer Anschlussstelle 14 der Abzweigleitung 8 an die Abgasleitung 4 mit einer teilweise in den Abgasstrom der Abgasleitung 4 gesteuert drehbaren Klappe 15 ausgerüstet, die in Ausgangsposition die Abgas-Abzweigleitung 8 verschließt. Mit dieser erfindungsgemäßen Anbindung des abgasbeaufschlagten Nutz-Wärmetauschers 5 an die Abgasleitung 4 sind in vorteilhafter Weise gasdynamische Vorgänge der Brennkraftmaschine 2 in der Abgasleitung 4 kaum gestört.

Wie aus der Figur weiter ersichtlich, steht der abgasbeaufschlagte Nutz-Wärmetauscher 5 bei Kaltstart der Brennkraftmaschine und niederem Lastbetrieb bei einem vom Thermostat 1 abgesteuerten Fahrtwind-Kühlmittel-Wärmetauscher 10 über eine Vorlaufleitung 16 mit einem Kühlmittel-Kurzschlussbereich 3' der Brennkraftmaschine 2 in Verbindung, so dass dem Nutz-Wärmetauscher 5 bereits angewärmtes Kühlmittel zugeführt ist, das über die im Abgas enthaltene Wärme weiter erwärmt wird.

Zum Abfließen des erwärmten Kühlmittels aus dem Nutz-Wärmetauscher 5 ist dieser mit zwei ventilgesteuerten Rücklaufleitungen 11 und 12 zu unterschiedlichen Wirkungsbereichen ausgerüstet. Bevorzugt ist das durch Abgas zusätzlich erwärmte Kühlmittel über die in einem Steuerprogramm vorrangig bewertete Rücklaufleitung 11 dem Heizwärmetauscher 6 der Heiz-/Klimaanlage des Fahrzeuges zugeführt, wobei die Rücklaufleitung 11 beispielsweise mit einer an den Kühlmittel-Kurzschlussbereich 3' der Brennkraftmaschine 2 verbundenen Vorlaufleitung 17 des Heizwärmetauschers 6 kühlmittelführend angeschlossen ist.

Mit dieser Anordnung ist sichergestellt, dass dem aus dem Kühlmittel-Kurzschlussbereich 3' der Brennkraftmaschine 2 beim Kaltstart zugeführtes angewärmtes Kühlmittel vorrangig das im Nutz-Wärmetauscher 5 mittels Abgas aufgeheizte Kühlmittel zugeführt wird, wobei die Kühlmittelanteile beispielsweise über eine im Vorlauf 16 des Nutz-Wärmetauschers 5 angeordnete regelbare Förderpumpe 18 bestimmbar sind.

Wie aus der Zeichnung ersichtlich, kann die der Kühlmittelmengen-Steuerung für den Nutz-Wärmetauscher 5 dienende regelbare Förderpumpe 18 stromab eines Anschlusses 20 der Vorlaufleitung 16 des abgasbeaufschlagten Nutz-Wärmetauschers 5 an eine im Bypass zum Thermostaten 1 angeordnete Vorlaufleitung 19 des Fahrtwind-Kühlmittel-Wärmetauschers 10 angeordnet sein.

Als weiteren Wirkungsbereich des mit Abgas erwärmten Kühlmittels steht die Rücklaufleitung 12 des Nutz-Wärmetauschers 5 mit dem Kühlkreislauf 3 der Brennkraftmaschine in Verbindung, wobei die Rücklaufleitung 12 mit der Umwälzpumpe 13 der Brennkraftmaschine 2 ansaugseitig verbunden ist. Mit dieser Anordnung erfährt das mit Abgas aufgeheizte Kühlmittel eine rasche Verteilung in den Kühlmittelräumen der Brennkraftmaschine 2 und dient somit einer raschen Erwärmung der Brennkraftmaschine 2 insbesondere bei niederer Last der Brennkraftmaschine 2 und bereits vom Nutz-Wärmetauscher 5 abgetrenntem Heiz-Wärmetauscher 6, dessen Rücklaufleitung 21 vorzugsweise ebenfalls mit der Umwälzpumpe 13 der Brennkraftmaschine 2 ansaugseitig in Verbindung steht.

Die Nutzung des Nutz-Wärmetauschers 5 erfolgt vorzugsweise über ein in einer elektronischen Steuereinheit abgelegtes Steuerprogramm derart, dass der Heizwärmetauscher 6 bei vom Fahrer mittelbar geöffnetem Zulaufventil 22 vorrangig über die ventilgesteuerte Rücklaufleitung 11 mit durch Abgas erwärmten Kühlmittel versorgt ist. Bei ausreichender Temperierung der Fahrgastzelle und weiterem Betrieb des Nutz-Wärmetauschers 5 erfolgt gemäß einer zweitrangigen Bewertung im Steuerprogramm die Zuführung von durch Abgas erwärmtem Kühlmittel über die Rücklaufleitung 12 in den Kühlkreislauf 3. Schließlich kann entweder durch den Fahrer oder über Parameter zusätzlich gesteuert das Steuerprogramm in drittrangiger Bewertung beide Rücklaufleitungen 11 und 12 offen steuern.

Für eine Zu- und Abschaltung der Rücklaufleitungen 11 und 12 ist jeder Wertigkeit im Steuerprogramm eine Schaltstellung eines 4-/3-Wegeventils 23 zugeordnet.

Eine weitere Möglichkeit der Zu- und Abschaltung der Rücklaufleitungen 11 und 12 besteht darin, jede der Steuerleitungen 11, 12 mit einem Taktventil auszurüsten, die einzeln oder gemeinsam ansteuerbar sind.

## Patentansprüche

1. Flüssigkeitsgekühlte, thermostatgesteuerte Brennkraftmaschine für ein Fahrzeug, insbesondere PKW,
- umfassend einen mit dem Kühlkreislauf (3) der Brennkraftmaschine (2) verbundenen und vom Abgas einer Abgasleitung (4) gesteuert beaufschlagten Nutz-Wärmetauscher (5), wobei
- mit dem Kühlkreislauf (3) ferner ein zuschaltbarer Heizwärmetauscher (6) einer Heiz-/Klimaanlage des Fahrzeuges in Verbindung steht,
**dadurch gekennzeichnet,**
- **dass** der Nutz-Wärmetauscher (5) mittels eines Abgas-Sammelbehälters (7) an einer Abgas-Abzweigleitung (8) einen mit der Abgasleitung (4) klappengesteuert verbundenen Blindstrang (9) bildet, und
- **dass** eine Vorlaufleitung (16) bei einem vom Thermostat (1) abgesteuerten Fahrtwind-Kühlmittel-Wärmetauscher (10) der Brennkraftmaschine (2) den abgasbeaufschlagten Nutz-Wärmetauscher (5) mit einem Kühlmittel-Kurzschlussbereich (3') der Brennkraftmaschine (2) verbindet, wobei
- von zwei vom Nutz-Wärmetauscher (5) abgehenden, ventilgesteuerten Rücklaufleitungen (11, 12) die mit dem Heizwärmetauscher (6) verbindbare Rücklaufleitung (11) in einem Steuerprogramm vorrangig bewertet ist gegenüber der mit einer Umwälzpumpe (13) der Brennkraftmaschine (2) ansaugseitig verbundenen anderen Rücklaufleitung (12).

2. Brennkraftmaschine nach Anspruch 1, **dadurch gekennzeichnet,**
- **dass** der mit dem abgasbeaufschlagten Nutz-Wärmetauscher (5) versehene Blindstrang (9) im Bereich einer Anschlussstelle (14) der Abzweigleitung (8) an die Abgasleitung (4) mit einer teilweise in den Abgasstrom der Abgasleitung (4) gesteuert schwenk- oder drehbaren Klappe (15) ausgerüstet ist, die
- in Ausgangsposition die Abgas-Abzweigleitung (8) verschließt.

3. Brennkraftmaschine nach Anspruch 1 und 2, **dadurch gekennzeichnet,**
- **dass** die Vorlaufleitung (16) des abgasbeaufschlagten Nutz-Wärmetauschers (5) an einer im Bypass zum Thermostaten (1) angeordneten Vorlaufleitung (19) des Fahrtwind-Kühlmittel-Wärmetauschers (10) angeschlossen ist, und eine
- stromab dieses Anschlusses (20) vorgesehene regelbare Förderpumpe (18) der Kühlmittelmengen-Steuerung durch den Nutz-Wärmetauscher (5) dient.

4. Brennkraftmaschine nach den Ansprüchen 1 bis 3, **dadurch gekennzeichnet,**
- **dass** die mit der Umwälzpumpe (13) der Brennkraftmaschine (2) verbundene Rücklaufleitung (12) im Steuerprogramm zweitrangig und
- beide Rücklaufleitungen (11, 12) gemeinsam betrieben drittrangig bewertet sind.

5. Brennkraftmaschine nach Anspruch 1 und 4, **dadurch gekennzeichnet, dass** jeder Wertigkeit im Steuerprogramm eine Schaltstellung eines 4-/3-Wegeventils (23) zugeordnet ist.

6. Brennkraftmaschine nach Anspruch 1 und 4, **dadurch gekennzeichnet, dass** die Rücklaufleitungen (11, 12) entsprechend der Wertigkeiten im Steuerprogramm mittels zwei Taktventilen gesteuert wird.

## Claims

1. A liquid-cooled thermostat-controlled internal combustion engine for a vehicle, especially a passenger car,
- comprising a useful heat exchanger (5) connected to the cooling circuit (3) of the engine (2) and supplied in controlled manner with exhaust gas from an exhaust pipe (4), wherein
- the cooling circuit (3) is also connected to a switchable heating heat exchanger (6) in a heating and air-conditioning system of the vehicle,
**characterised in that**
- the useful heat exchanger (5) via an exhaust-gas collecting container (7) on an exhaust branch pipe (8), forms a blind portion (9) controlled by a butterfly valve and connected to the exhaust pipe (4), and
- in the case where an airstream/coolant heat exchanger (10) of the engine (2) is controlled by a thermostat (1), a flow pipe (16) connects a coolant short-circuit region (3') of the engine (2) to the useful heat exchanger (5) supplied with exhaust gas, wherein
- out of two valve-controlled return pipes (11, 12) leading from the useful heat exchanger (5), the return pipe (11) connectable to the heating heat exchanger (6) is given precedence in a control program over the other return pipe (12), which is connected to a circulation pump (13) of the engine (2) on the intake side.

2. An engine according to claim 1, **characterised in that**
- the blind portion (9) comprising the useful heat-exchanger (5) supplied with exhaust gas, at a connector (14) between the branch pipe (8) and the exhaust pipe (4), is equipped with a butterfly valve (15) which is pivotable or rotatable in controlled manner partly into the flow of exhaust gas through the exhaust pipe (4) and
- in the starting position closes the exhaust branch pipe (8).

3. An engine according to claims 1 and 2, **characterised in that**
- the flow pipe (16) of the useful heat-exchanger (5) supplied with exhaust gas is connected to a flow pipe (19) disposed in the bypass to the thermostat (1) and belonging to the airstream/coolant heat exchanger (10), and
- an adjustable feed pump (18) provided downstream of the connection (20) controls the amount of coolant through the useful heat exchanger (5).

4. An engine according to claims 1 to 3, **characterised in that**
- the return pipe (12) connected to the circulation pump (13) of the engine (2) is given a second-rank value in the control program and
- the two return pipes (11, 12) when operated in common have third ranking.

5. An engine according to claims 1 and 4, **characterised in that** each value in the control program is associated with a switch position of a 4/3-way valve (23).

6. An engine according to claims 1 and 4, **characterised in that** the return pipes (11, 12) are controlled by two timing valves in accordance with the values in the control program.

## Revendications

1. Moteur à combustion interne refroidi par liquide, commandé par thermostat, pour un véhicule, en particulier une voiture de tourisme,
- comprenant un échangeur de chaleur utile (5), relié au circuit de refroidissement (3) du moteur à combustion interne (2) et sollicité, de manière commandée, par le gaz d'échappement d'une conduite de gaz d'échappement (4), dans lequel
- un échangeur de chaleur de chauffage (6) commutable d'un système de chauffage/climatisation du véhicule, est également relié au circuit de refroidissement (3),
**caractérisé en ce que**
- l'échangeur de chaleur utile (5) forme au moyen d'un collecteur de gaz d'échappement (7), sur une conduite de dérivation du gaz d'échappement (8), un tube borgne (9) relié, de manière commandée par clapet, avec la conduite de gaz d'échappement (4), et
- une conduite amont (16) près d'un échangeur de chaleur entre vent de marche et réfrigérant (10) commandé par le thermostat (1), du moteur à combustion interne (2), relie l'échangeur de chaleur utile (5) sollicité par le gaz d'échappement à une zone de court-circuit de réfrigérant (3') du moteur à combustion interne (2), de sorte que
- sur deux conduites de retour (11, 12) partant de l'échangeur de chaleur utile (5), commandées par soupape, la conduite de retour (11) reliable avec l'échangeur de chaleur de chauffage (6) est dans un programme de commande estimée prioritaire par rapport à l'autre conduite de retour (12) reliée, côté admission, à une pompe de recirculation (13) du moteur à combustion interne (2).

2. Moteur à combustion interne selon la revendication 1,
**caractérisé en ce que**
- le tube borgne (9) muni de l'échangeur de chaleur utile (5) sollicité par le gaz d'échappement est équipé, dans la zone d'un point de raccordement (14) de la conduite de dérivation (8) à la conduite de gaz d'échappement (4), d'un clapet (15) pivotant ou rotatif de manière commandée en partie dans l'écoulement de gaz d'échappement de la conduite de gaz d'échappement (4), clapet qui,
- en position initiale, ferme la conduite de dérivation de gaz d'échappement (8).

3. Moteur à combustion interne selon les revendications 1 et 2,
**caractérisé en ce que**
- la conduite amont (16) de l'échangeur de chaleur utile (5) sollicité par le gaz d'échappement est reliée à une conduite amont (19) de l'échangeur de chaleur entre vent de marche et réfrigérant (10), disposée en dérivation par rapport au thermostat 1, et
- une pompe d'alimentation (18) réglable, prévue an amont de ce raccordement (20), sert à la commande des quantités de réfrigérant à travers l'échangeur de chaleur utile (5).

4. Moteur à combustion interne selon les revendications 1 à 3,
**caractérisé en ce que**
- la conduite de retour (12) reliée à la pompe de recirculation (13) du moteur à combustion interne (2) est évaluée en deuxième priorité dans le programme de commande et
- les deux conduites de retour (11, 12) sont évaluées en troisième priorité en fonctionnant conjointement.

5. Moteur à combustion interne selon les revendications 1 et 4,
**caractérisé en ce qu'**
une position de commutation d'une soupape 4 voies/3 positions (23) est associée à chaque valeur évaluée dans le programme de commande.

6. Moteur à combustion interne selon les revendications 1 et 4,
**caractérisé en ce que**
les conduites de retour (11, 12) sont commandées par deux soupapes à synchronisation, en fonction des valeurs évaluées dans le programme de commande.
